(19)

Europäisches
Patentamt
European
Patent Office
Office européen
des brevets

(11)  **EP 2 838 071 A1**

(12)  **EUROPEAN PATENT APPLICATION**

(43) Date of publication:
18.02.2015  Bulletin 2015/08

(51) Int Cl.:
*G06T 17/05* [(2011.01)]

(21) Application number: 13180651.5

(22) Date of filing: 16.08.2013

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **VITO NV (Vlaamse Instelling voor
Technologisch
Onderzoek NV)
2400 Mol (BE)**

(72) Inventors:
• **Nackaerts, Kris
3665 As (BE)**
• **Kempenaers, Stephen
2580 Beerzel (Putte) (BE)**

(74) Representative: **IPLodge bvba
Technologielaan 9
3001 Heverlee (BE)**

(54)  **Computer-implemented method, server and computer program product for constructing a
tiled digital terrain model**

(57)    The present invention relates a computer-implemented method, a server and a computer program product for
constructing a tiled digital terrain model.

FIGURE 1

**Description**

**TECHNICAL FIELD**

The present invention relates a computer-implemented method, a server and a computer program product for constructing a tiled digital terrain model.

**INTRODUCTION**

Currently digital terrain model producing organizations face major challenges in keeping up with the ever-growing amount of data that are produced by modern sensor techniques such as laser scanning (LIDAR). For example, digital nautical charts are generated on the basis of bathymetric data comprising depth information relative to the ocean's surface measured at multiple locations within a predetermined geographical area. These data are collected by a digital filing system on board of a survey ship and sent as a very large (order of terabytes or more) survey file, to a hydrographic institute where these surveys are stored in a large survey archive.
Typically a digital terrain model (DTM), e.g. a digital chart or map, covers a geographical area, which is much larger than the area covered by a single survey. Therefore data of multiple surveys are used in order to generate a DTM. This process is complex as surveys often overlap and may comprise conflicting data (e.g. different depths at the same location). Hence certain techniques are used to remove these overlaps and to produce a seamless continuous chart on the basis of the surveys. These techniques involve dividing the geographical area of a desired DTM and the surveys into a grid and copying data from gridded surveys into the gridded DTM. Examples of conventional techniques for generating a DTM are described in US 6,721,694 or WO 2012007070 A2.
Moreover, apart from DTM for save navigation there is an increasing demand for other DTM products. For example, navigational DTMs show a simplified model of the seabed emphasizing shallows. In contrast, for off-shore activities (e.g. the construction of a wind farm or laying a pipe line) a much more accurate depiction of the seabed is require, showing not only the shallows but also the deeper parts of the seabed. Yet other data requirements are needed for use in other applications e.g. morphology, dredging or coastal management. DTM producing organizations thus generate and maintain different digital charts of different content, scale and size wherein each digital chart is generated on the basis of a predetermined number of surveys according to certain rules. A number of these DTMs may overlap. Hence, with increasing survey data volumes, increasing number of survey data updates and increasing demand for different types of DTMs, the conventional approach used by DTM producing organizations cause a number of problems.
Problem with these methods is that data is gathered frequently for sub-regions over a relatively large (with respect to the scanned areas) a study area, i.e. a whole region is not covered every time data is gathered. Typically ships or unmanned airplanes scan areas with a small coverage area with an irregular shape. In today's systems, data is expected to be inserted in a correct time sequential order.
Also it is very difficult to draw conclusions on the huge amount of data, or the end version of data, e.g. bathymetric data. Often it does not show an adequate or complete overview of the terrain.
Raster data corresponds to a discretized representation of reality in pixels or cells. Well known examples are aerial pictures, satellite imagery, digital elevation models and bathym etry data.
Present solutions cause two extra problems when used for raster data. First, for efficient map display, this would need significant processing. Moreover, it's impossible to predict the amount of processing beforehand, as a result, it's not possible to provide real-time services (operational deadlines from event to system response).
The aim of the present invention is to provide a solution to overcome at least part of the above mentioned disadvantages. The invention thereto aims to provide a computer-implemented method for constructing a tiled digital terrain model comprising:

a) storing tiles for a corresponding tile area and for points of time within a period from an initial point of time to a present point of time, wherein a tile comprises raster data;
b) continuously updating tiles by:

- determining one or more tiles which tiles comprise less recent raster data than new available raster data;
- storing m ore recent raster data into said determ ined one or more tiles;

wherein said stored tiles for a specific point of time represent a digital terrain model with the most recent available raster data for said point of time as described in claim 1.

## SUMMARY

The present invention provides in one embodiment, a computer-implemented method for constructing a tiled digital terrain model comprising:

a) storing tiles for a corresponding tile area and for points of time within a period from an initial point of time to a present point of time, wherein a tile comprises raster data;
b) continuously updating tiles by:

- determining one or more tiles which tiles comprise less recent raster data than new available raster data;
- storing m ore recent raster data into said determ ined one or more tiles;

wherein said stored tiles for a specific point of time represent a digital terrain model with the most recent available raster data for said point of time.

It is advantageous as this allows reconstructing a seamless spatial raster dataset for any point of time without excessive processing.

Also the method allows to process new incoming fragmented raster data in a nontime sequential order. Only the necessary data is stored and storage needs are minimized.

It is also advantageous as raster data is stored in such a way that no processing is needed for visualization, allowing high performance realtime services.

In a second embodiment, the present invention provides a server for constructing a tiled digital terrain model, comprising at least one processor, the at least one processor configured to:

a) storing tiles for a corresponding tile area and for points of time within a period from an initial point of time to a present point of time, wherein a tile comprises raster data;
b) continuously updating tiles by:

- determining one or more tiles which tiles comprise less recent raster data than new available raster data;
- storing m ore recent raster data into said determ ined one or more tiles;

wherein said stored tiles for a specific point of time represent a digital terrain model with the most recent available raster data for said point of time.

In a third embodiment, the present invention provides a computer program product for constructing a tiled digital terrain model, said computer program product comprising at least one computer-readable storage medium having computer-readable program code portions stored therein, the computer-readable program code portions comprising instructions for:

a) storing tiles for a corresponding tile area and for points of time within a period from an initial point of time to a present point of time, wherein a tile comprises raster data;
b) continuously updating tiles by:

- determining one or more tiles which tiles comprise less recent raster data than new available raster data;
- storing m ore recent raster data into said determ ined one or more tiles;

wherein said stored tiles for a specific point of time represent a digital terrain model with the most recent available raster data for said point of time.

While multiple embodiments are disclosed, still other embodiments of the present invention will become apparent to those skilled in the art from the following detailed description, which shows and describes illustrative embodiments of the invention. As will be realized, the invention is capable of modifications in various obvious aspects, all without departing from the spirit and scope of the present invention. Accordingly, the drawings and detailed description are to be regarded as illustrative in nature and not restrictive.

## DESCRIPTION OF THE FIGURES

Further features, advantages and objects of the present invention will become apparent for the skilled person when reading the following detailed description of embodiments of the present invention, when taken in conjunction with the figures of the enclosed drawings.

**FIG. 1** shows an overview of a mask based workflow in accordance with one embodiment of the invention.

**FIG. 2** illustrates a combined binary mask for a tile of 2000x2000 pixels.

## DETAILED DESCRIPTION OF THE INVENTION

The present invention relates to a computer-implemented method for constructing a tiled digital terrain model. Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:

"A", "an", and "the" as used herein refers to both singular and plural referents unless the context clearly dictates otherwise. By way of example, "a tile" refers to one or more than one tile.

"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

In a first aspect, the present invention provides a computer-implemented method for constructing a tiled digital terrain model comprising:

a) storing tiles for a corresponding tile area and for points of time within a period from an initial point of time to a present point of time, wherein a tile comprises raster data;
b) continuously updating tiles by:

- determining one or more tiles which tiles comprise less recent raster data than new available raster data;
- storing m ore recent raster data into said determ ined one or more tiles;

wherein said stored tiles for a specific point of time represent a digital terrain model with the most recent available raster data for said point of time.

It is advantageous as this allows reconstructing a seamless spatial raster dataset for any point of time without excessive processing.

Also the method allows to process new incoming fragmented raster data in a nontime sequential order. Only the necessary data is stored and storage needs are minimized.

An end user is able to query the full history of the raster data. Hereby, inspection of liability or contractual agreements with e.g. dredgers can be improved as e.g. the agreed amount of dredge to be done by a certain date, can be checked in a more valuable manner, based on more accurate data for said certain date.

By storing raster data in tiles, serving and displaying to web clients is improved. It is advantageous as no processing is needed for visualizing said raster data. This allows high real-time performance.

The method is easy executable. It therefore allows fully automated processing, thus without user intervention.

It also allows reduction of processing time from single beam and multibeam data acquisition to the availability to the end user

In a preferred embodiment, the invention provides a computer-implemented method, wherein per tile a mask is stored, said mask describing the available raster data for said tile for said corresponding point of time.

This is advantageous as this allows easy and quick calculation of the raster data that needs to be updated.

In a preferred embodiment, the invention provides a computer-implemented method, wherein said mask is a binary mask.

This is advantageous as this allows lower used disc space for said masks.

In a more preferred embodiment, the invention provides a computer-implemented method, wherein said mask is compressed as stored.

This is advantageous as this allows efficient compressing as said binary masks are digital (cfr. 0 or 1). Examples of compression methods are 'run length encoding', Pack Bits, LZW, CCITT4 and/or ZIP compression.

In a more preferred embodiment, the invention provides a computer-implemented method, wherein storing more recent raster data into a determined tile, comprises:

- calculating a combined mask, by merging the masks of tiles, which tiles correspond with the same tile area as said determined tile and which tiles correspond with a later point of time than the point of time of said one or more determined tiles;
- updating and storing said determined tile with raster data obtained by overlaying said combined mask with said more recent raster data.

This is advantageous as it allows less processing time and a fast updating of all stored tiles.

In an even more preferred embodiment, the invention provides a computer-implemented method, wherein said calculating corresponds to an inclusive disjunctive operation of matrices corresponding to said masks of the tiles with the same corresponding tile area as said determined tile.

This is advantageous as this allows easy and quick execution of said calculation.

In a preferred embodiment, the invention provides a computer-implemented method, wherein a stored tile comprises a corresponding point of time.

More preferably said stored tile comprises raster data, said corresponding point of time, a file path and a file name.

In a preferred embodiment, the invention provides a computer-implemented method, wherein said point of time corresponds to one of a set of discrete points of time regularly dividing said period.

In a preferred embodiment, the invention provides a computer-implemented method, wherein said point of time is a date.

This is advantageous as this allows daily processing (e.g. at night) to update the stored tiles in said server. This leads to daily accessible historic data.

In a preferred embodiment, the invention provides a computer-implemented method, wherein said tiles are stored on a server and wherein new raster data is provided to said server through a network system.

This is advantageous as this allows automatic inserting of new raster data into the digital terrain model.

In a preferred embodiment, the invention provides a computer-implemented method, wherein said raster data is bathymetric data.

In a second aspect, the present invention provides a server for constructing a tiled digital terrain model, comprising at least one processor, the at least one processor configured to:

a) storing tiles for a corresponding tile area and for points of time within a period from an initial point of time to a present point of time, wherein a tile comprises raster data;
b) continuously updating tiles by:

- determining one or more tiles which tiles comprise less recent raster data than new available raster data;
- storing m ore recent raster data into said determ ined one or more tiles;

wherein said stored tiles for a specific point of time represent a digital terrain model with the most recent available raster data for said point of time.

In a third aspect, the present invention provides a computer program product for constructing a tiled digital terrain model, said computer program product comprising at least one computer-readable storage medium having computer-readable program code portions stored therein, the computer-readable program code portions comprising instructions for:

c) storing tiles for a corresponding tile area and for points of time within a period from an initial point of time to a present point of time, wherein a tile comprises raster data;
d) continuously updating tiles by:

- determining one or more tiles which tiles comprise less recent raster data than new available raster data;
- storing m ore recent raster data into said determ ined one or more tiles;

wherein said stored tiles for a specific point of time represent a digital terrain model with the most recent available raster data for said point of time.

**EXAMPLES**

EXAMPLE 1

This example shows an exemplary method in accordance to an embodiment of the invention.

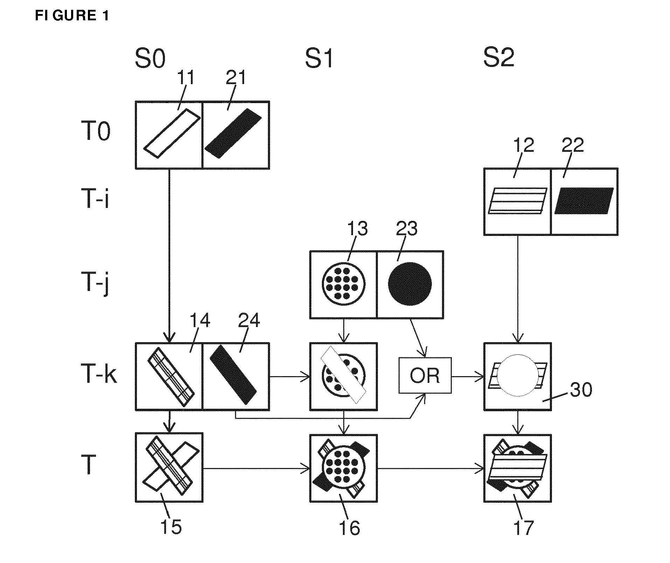

Figure 1 shows two timelines: the data acquisition timeline horizontally and the data upload timeline vertically.

To simplify reading, assume that the system comprises bathymetry data (e.g. depth soundings). Such data is gathered daily, but only over small regions. Suppose that at time S0 an initial historical dataset was available (rectangle with increasing slope). At time S0 data is acquired (rectangle with decreasing slope) but not directly uploaded to the versioning system, for example because of preprocessing issues of the dataset. At T0, the versioning system only stores the original initial dataset, tiled (rectangle with increasing slope) and a binary mask of the region we had data for before time S0. This binary (only 0's and I's) dataset can be compressed significantly. At time S1 another region is acquired (disc), at time S2 data is acquired over the parallelogram region. Data is typically gathered by several independent companies with their own internal workflows or procedures. As a result, the fragmented data is often uploaded to the system in a non-sequential order: S2 first, followed by S1 and the actually first acquired dataset is uploaded last at T-k.

The end-user is able to view the most up-to-date version of the dataset for any given date. Suppose a user requests a representation of the raster data at time T0, only the rectangle with increasing slope will be visible even though at T0, all data could have been acquired. At T-i, the end user will be able to visualize data acquired at S2, but not at S1 , since these are not up loaded yet. When the end user requests a representation of the dataset at T-i, for date S0, he will only see the rectangle with increasing slope (not the overlaid red) since this data is not yet uploaded. As new data is uploaded to the system, it is inserted correctly, and the representation will become more correct. At time Tx, the user will get a correct representation for time S0: the rectangle with decreasing slope over the rectangle with increasing slope and also for S1 and S2.

The method is based on the binary masks in combination with a database to store metadata. When at time T-i new data is uploaded, a new representation is calculated at T-i for time S2 (figure in before last column at T-i). This can be done by (CPU and GPU efficient) matrix calculations. The '+'-operation below should interpreted as a matrix-operation, wherein for A+B, the non-zero data of B overwrite the corresponding data of A. For example for a simple binary 2x2 matrix example:

$$\begin{bmatrix} 1 & 0 \\ 1 & 0 \end{bmatrix} + \begin{bmatrix} 1 & 0 \\ 0 & 1 \end{bmatrix} = \begin{bmatrix} 1 & 0 \\ 1 & 1 \end{bmatrix}$$

Since all data is tiled (only one tile is illustrated in Figure 1), all calculations can be performed in memory:

$$\mathrm{Tile(S0/T0) * Mask(S0/T0) + Tile(S2/T\text{-}i) * Mask(S2/T\text{-}i)}$$

The process becomes more obvious when at time T-j, data has to be injected into the system. The purple disc contains new data and has to be 'inserted' correctly. In traditional versioning systems, the result would be a simple overlay, ie. outer right representation at time T-j which is not correct.

In this system, all available dates are recalculated, once each time new data arrives, which is possible via efficient calculations:

Correct representation for time S0=Tile(S0/T0)

Correct representation for time S1 = Tile(S0/T0)*Mask(S0/T0)+Tile(S1/T-j)*Mask(S1/T-j)

Correct representation for time S2 = Tile(S0/T0)* Mask(S0/T0)+Tile(S1/T-j)* Mask(S1/T-j)+Tile(S2/T-i)* Mask(S2/T-i)

When at T-k, new data arrives acquired at S0, the following calculations are performed to update all the versioned tiles in the system:

Correct representation for time S0 (lowest row at Tx)= Tile(S0/T0)*Mask(S0/T0)+Tile(S0/T-k)* Mask(S0/T-k)

Correct representation for time SI (lowest row at Tx)= Tile(S0/T0)*Mask(S0/T0)+Tile(S0/T-k)* Mask(S0/T-k)+Tile(S1/T-j)*Mask(S1/T-j)

Correct representation for time S2 (lowest row at Tx)= Tile(S0/T0)*Mask(S0/T0)+Tile(S0,T-k)* Mask(S0/T-k)+Tile(S1,T-j)*Mask(S1/T-j)+ Tile(S2, T-i)*Mask(S2/T-i)

Important is that only tiles that are affected by new data are processed and stored. The information which tile is altered on which dates is stored in a database. A seamless layer can thus be created by querying the database for all most recent tiles for a given date.

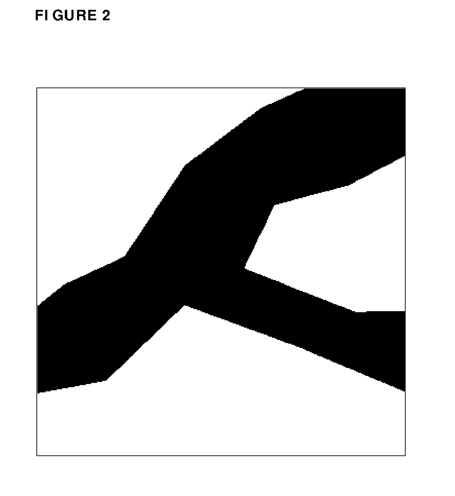

Figure 2 illustrates a combined binary mask for a tile of 2000x2000 pixels.

**REFERENCE NUMBER LIST**

| | |
|---|---|
| 11 | Tile(S0/T0) |
| 12 | Tile(S2/T-i) |
| 13 | Tile(S1/T-j) |
| 14 | Tile(S0/T-k) |
| 15 | Tile(S0/T) |
| 16 | Tile(S1/T) |
| 17 | Tile(S2/T) |
| 21 | Mask(S0/T0) |
| 22 | Mask (S2/T-i) |
| 23 | Mask (S1/T-j) |
| 24 | Mask (S0/T-k) |
| 30 | Combined Mask (S2/T) |

**Claims**

1. Computer-implemented method for constructing a tiled digital terrain model comprising:

   a) storing tiles (11-17) for a corresponding tile area and for points of time within a period from an initial point of time to a present point of time, wherein a tile comprises raster data;
   b) continuously updating tiles by:

   - determining one or more tiles which tiles comprise less recent raster data than new available raster data;
   - storing m ore recent raster data into said determ ined one or more tiles;
   wherein said stored tiles for a specific point of time represent a digital terrain model with the most recent available raster data for said point of time.

2. Computer-implemented method according to claim 1, wherein per tile a mask (21-24) is stored, said mask describing the available raster data for said tile for said corresponding point of time.

3. Computer-implemented method according to claims 1 or 2, wherein said mask is a binary mask.

4. Computer-implemented method according to claim 3, wherein said mask is compressed as stored.

5. Computer-implemented method according to any of claims 2-4, wherein storing more recent raster data into a determined tile, comprises:

   - calculating a combined mask (30), by merging the masks of tiles, which tiles correspond with the same tile area as said determined tile and which tiles correspond with a later point of time than the point of time of said one or more determined tiles;
   - updating and storing said determined tile with raster data obtained by overlaying said combined mask with said more recent raster data.

6. Computer-implemented method according to claim 5, wherein said calculating corresponds to an inclusive disjunctive operation of matrices corresponding to said masks of the tiles with the same corresponding tile area as said determined tile.

7. Computer-implemented method according to any of claims 1-6, wherein a stored tile comprises a corresponding point of time.

8. Computer-implemented method according to any of claims 1-7, wherein said point of time corresponds to one of a set of discrete points of time regularly dividing said period.

9. Computer-implemented method according to any of claims 1-8, wherein said point of time is a date.

10. Computer-implemented method according to any of claims 1-9, wherein said tiles are stored on a server and wherein new raster data is provided to said server through a network system.

11. Computer-implemented method according to any of claims 1-10, wherein said raster data is bathymetric data.

12. A server for constructing a tiled digital terrain model, comprising at least one processor, the at least one processor configured to:

    c) storing tiles for a corresponding tile area and for points of time within a period from an initial point of time to a present point of time, wherein a tile comprises raster data;
    d) continuously updating tiles by:

        - determining one or more tiles which tiles comprise less recent raster data than new available raster data;
        - storing m ore recent raster data into said determ ined one or more tiles;
        wherein said stored tiles for a specific point of time represent a digital terrain model with the most recent available raster data for said point of time.

13. A computer program product for constructing a tiled digital terrain model, said computer program product comprising at least one computer-readable storage medium having computer-readable program code portions stored therein, the computer-readable program code portions comprising instructions for:

    e) storing tiles for a corresponding tile area and for points of time within a period from an initial point of time to a present point of time, wherein a tile comprises raster data;
    f) continuously updating tiles by:

        - determining one or more tiles which tiles comprise less recent raster data than new available raster data;
        - storing m ore recent raster data into said determ ined one or more tiles;
        wherein said stored tiles for a specific point of time represent a digital terrain model with the most recent available raster data for said point of time.

**FIGURE 1**

FI GURE 2

Europäisches
Patentamt

European
Patent Office

Office européen
des brevets

# EUROPEAN SEARCH REPORT

Application Number

EP 13 18 0651

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/007070 A2 (HAMMING JACOBUS JOHANNES [NL]) 19 January 2012 (2012-01-19) * page 9, line 10 - line 17 * * page 10, line 31 - line 37 * ----- | 1-13 | INV. G06T17/05 |
| X | WO 2010/024873 A1 (GOOGLE INC [US]; KIRMSE ANDREW [US]; NASH REUEL WILLIAM [US]; ZELINKA) 4 March 2010 (2010-03-04) * paragraphs [0064], [0078] * * figures 7a,7b * ----- | 1-13 | |
| A | US 7 912 296 B1 (ZELINKA STEPHEN D [US] ET AL) 22 March 2011 (2011-03-22) * abstract * * figure 2 * ----- | 1-13 | |

TECHNICAL FIELDS
SEARCHED      (IPC)

G06T

The present search report has been drawn up for all claims

| Place of search | Date of completion of the search | Examiner |
|---|---|---|
| Berlin | 29 October 2013 | dos Santos, Luís |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 13 18 0651

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2013

| Patent document cited in search report | Publication date | Patent family member(s) | Publication date |
|---|---|---|---|
| WO 2012007070 A2 | 19-01-2012 | NONE | |
| WO 2010024873 A1 | 04-03-2010 | AU 2009286145 A1 | 04-03-2010 |
| | | CA 2735326 A1 | 04-03-2010 |
| | | CA 2791456 A1 | 04-03-2010 |
| | | CA 2820284 A1 | 04-03-2010 |
| | | EP 2321770 A1 | 18-05-2011 |
| | | US 2010054527 A1 | 04-03-2010 |
| | | US 2012045098 A1 | 23-02-2012 |
| | | US 2013011079 A1 | 10-01-2013 |
| | | WO 2010024873 A1 | 04-03-2010 |
| US 7912296 B1 | 22-03-2011 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6721694 B

- WO 2012007070 A2